# EUROPÄISCHE PATENTSCHRIFT

(11) **EP 1 745 182 B1**
(45) Veröffentlichungstag und Bekanntmachung des Hinweises auf die Patenterteilung: **02.02.2011**
(21) Anmeldenummer: 05742752.8
(22) Anmeldetag: 28.04.2005
(51) Int. Cl.: E04B 1/00

(54) **KRAGPLATTENANSCHLUSSELEMENT**
CANTILEVER PLATE CONNECTION ELEMENT
ELEMENT DE CONNEXION DE DALLE EN CONSOLE

(30) Priorität: 28.04.2004 DE 102004020914
(43) Veröffentlichungstag der Anmeldung: 24.01.2007
(73) Patentinhaber: Max Frank GmbH & Co. KG, D-94339 Leiblfing (DE)
(72) Erfinder: PENZKOFER, Ludwig, 94339 Leiblfing (DE)
(74) Vertreter: Graf Glück Habersack Kritzenberger
(86) Internationale Anmeldenummer: PCT/EP2005/004582
(87) Internationale Veröffentlichungsnummer: WO 2005/106144

(56) Entgegenhaltungen:
- EP-A- 1 225 282
- DE-A1- 19 508 292
- DE-U1- 9 410 288

## Beschreibung

### Technisches Gebiet

Die vorliegende Erfindung betrifft ein Kragplattenanschlusselement zum Verbinden einer Decken-/Bodenplatte und einer auskragenden Platte.

### Stand der Technik

Kragplattenanschlusselemente sind seit vielen Jahren bekannt. Die DE 3 005 571 B1 offenbart zum Beispiel ein Kragplattenanschlusselement mit einem länglichen, quaderförmigen Isolierkörper aus thermisch isolierendem Material. Der Isolierkörper ist mit länglichen, metallenen Bewehrungselementen durchsetzt, die sich im Wesentlichen quer zum Isolierkörper erstrecken und die zur Aufnahme von Zugkräften ausgelegt sind. Neben diesen Bewehrungselementen weist das Kragplattenanschlusselement Querkraftstäbe aus Armierungsstahl sowie Stahlkonstruktionsteile auf, die als Druckelemente wirken.

Zur Kostenreduktion würden auch Kragplattenanschlusselemente vorgeschlagen, die als mehrteiliger Bausatz ausgestaltet sind, der erst auf der Baustelle zusammengefügt wird. Lösungen dieser Art gehen beispielsweise aus der DE 34 26 538 A1, der EP 117 897 A1 sowie der EP 388 692 A1 hervor.

Die EP 121 685 A2 beschäftigt sich mit Druckelementen von Kragplattenanschlusselementen. Als Druckelemente werden hier Stäbe verwendet, welche in beiden Bauteilen beidseits des Isolierkörpers eingelagert werden. Die Stäbe sind so schlank, dass sie temperaturbedingte Längsbewegungen quer zu den Druckstäben aufnehmen beziehungsweise diesen Längsbewegungen folgen können. Dies kann jedoch zu Betonabsplitterungen und Ermüdungsbruch im Bereich der Einführung der Druckstäbe in die Kragplatte beziehungsweise in die Decken-/Bodenplatte führen.

Aus der EP 1 229 176 A2 ist ein Kragplattenanschlusselement mit zwei fluchtenden Druckelementen bekannt Die beiden Druckelemente sind durch ein im Isolierkörper angeordnetes Gleitiager getrennt. Als Gleitlager wird eine Gleitfolie oder eine zwischen zwei Platten angeordnete Gleitschicht verwendet. Insbesondere im Zusammenhang mit der Gleitfolie tritt aber hier das Problem auf, dass das Gleitmittel nach einer gewissen Anzahl an thermischen Bewegungen der auskragenden Platte seine Funktionsfähigkelt verliert.

Aus der EP 1 225 282 A2 ist schließfich ein Bauelement zur Wärmedämmung bekannt, das einen Isolierkörper und Druckelemente umfasst, wobei die Druckelemente aus Beton bestehen und durch Extrusion oder Gießen hergestellt werden. Die unter Verwendung einer Gießform hergestellten Betondruckelemente werden zusammen mit der Gießform in das Bauteil eingebaut. Die Gießform wirkt dann als Gleitschicht, wodurch das Druckelement den Relativbewegungen der beiden angrenzenden Betonbauteile gleitend folgen kann. Laut EP 1 225 282 A2 ergibt sich daraus der besondere Vorteil, dass das Betondruckelement immer mit einer ebenen und glatten Außenfläche am angrenzenden Betonbauteil anliegt, unabhängig vom jeweils in die Gießform eingefüllten Betonmaterial.

Mit der von der EP 1 225 282 A2 vorgeschlagenen Lösung sind aber auch Nachteile verbunden. Bekanntermaßen weisen Decken-/Bodenplatten und auskragende Platten sehr unterschiedliche Qualitäten auf. Oftmals wird Beton minderer Güte verwendet, wodurch es vor allern nach längerer Standzeit und bei hohen Belastungen durch Relativbewegungen der auskragenden Platte zu dem Gebäude zu Beschädigungen und insbesondere zum Ausbrechen des Betons kommen kann. Besonders gefährdet ist dabei die Umgebung der Grenzfläche zwischen Druckelement und Decken-/Bodenplatte bzw. Druckelement und auskragender Platte.

Die DE 40 09 987 C2 beschreibt ein wärmedämmendes Bauelement, das zwischen einem Gebäude und einem vorkragenden Gebäudeteil angeordnet ist. Zur Übertragung von Druckkräften sind ein oder mehrere Druckelemente aus druckfestem Material in das Bauelement integriert. Die Druckelemente bestehen aus einem Stahlstab, der an seinen gegenüberliegenden Enden Endzapfen aufweist und dessen beide Enden jeweils mit einer Druckplatte gelenkig verbunden sind. Zwischen Druckstab und Endzapfen befinden sich Absätze, die die Form eines Oberflächensegments einer Kugel besitzen. In der Mitte der Druckplatte befindet sich eine Vertiefung, die mittig eine Durchgangsbohrung aufweist. Die Vertiefung ist so ausgeführt, dass sie den zwischen Druckstab und Endzapfen angeordneten Absatz flächig berührt.

Die Endzapfen dienen der Fixierung der Druckplatten bei der Herstellung des Bauelements, dessen Transport auf die Baustelle und dem Anbetonieren des vorkragenden Betonteils. Der Druckstab und die Endzapfen sind einstückig aus Stahl gefertigt. Die Druckplatten sind an dem Druckstab angenietet oder mit dem Druckstab verschweißt. Laut DE 40 09 987 C2 scheren bei einer Relativbewegung zwischen der Betondecke und der Balkonplatte die Endzapfen ab, so dass für diesen Fall von einer gelenkigen Verbindung gesprochen werden kann.

Nachteilig an dem in der DE 40 09 987 C2 beschriebenen Bauelement ist insbesondere das unkontrollierte Abreißen der Endzapfen von dem Druckstab, wodurch eine raue Oberfläche sowohl am Druckstab Wie auch an den Endzapfen entsteht. Dadurch ergibt sich bei einer Relativbewegung zwischen Betondecke und Balkonplatte ein erhöhter Reibungswiderstand.

### Darstellung der Erfindung

Hier setzt die Erfindung an. Es soll ein Kragplattenanschlusselement zur Verfügung gestellt werden, das die thermisch bedingten Bewegungen der auskragenden Platte in einer Weise aufnehmen kann, die den umgebenden Beton der Decken- /Bodenplatte bzw. der auskragenden Platte praktisch nicht belastet. Diese Aufgabe wird erfindungsgemäß durch das Kragplattenanschlusselement gemäß unabhängigem Patentanspruch 1 gelöst. Weitere vorteilhafte Aspekte, Details und Ausgestaltungen der Erfindung ergeben sich aus den abhängigen Ansprüchen, der Beschreibung sowie den Zeichnungen.

Die vorliegende Erfindung verwendet nicht wie bisher üblich ebene Gleitflächen, die die translatorische Bewegung der auskragenden Platte zulassen, sondern Gelenkelemente, die den thermisch bedingten Bewegungen der auskragenden Platte durch eine Kippbewegung folgen. Der Erfindung liegt die Idee zu Grunde, dass die Relativbewegung der Druckelemente zu den umgebenden Betonbauteilen zwischen zwei Oberflächen bekannter Zusammensetzung und damit bekannter Qualität erfolgen soll.

Das erfindungsgemäße Kragplaftenanschtussalement verbindet eine Decken-/Bodenplatte und eine auskragende Platte. Es weist Zugmittel. Querkraftmittel, Druckmittel und einen quaderförmigen Isolierkörper auf, wobei wenigstens ein Druckmittel als ein den quaderförmigen Isolierkörper durchsetzendes Gelenkelement ausgebildet ist. Die Zugmittel dienen zur Aufnahme von Zugkräften, die Querkraftmittel zur Aufnahme von Schub- oder Querkräften und die Druckmittel zur Aufnahme von Druckkräften. Das Gelenkelement besteht aus einem Hauptkörper, einem decken-/bodenplattenseitigen Endabschnitt und einem kragplattenseitigen Endabschnitt. Der Hauptkörper ist im Wesentlichen von dem quaderförmigen Isolierkörper umschlossen, während die Endabschnitte im eingebauten Zustand in die auskragende Platte und in die Decken-/Bodenplatte hineinragen. Die Oberflächen der beiden Endabschnitte des Gelenkelements weisen jeweils entlang wenigstens einer Richtung eine positive Krümmung auf und zumindest ein Endabschnitt ist mit einem Gleitmittel ausgestattet Erfindungsgemäß handelt es sich bei dem Gleitmittel um eine zu dem Endabschnitt formschlüssige, aus einer Folie bestehende Gelenkpfanne, wobei die Gelenkpfanne im eingebauten Zustand fest mit dem umgebenden Beton verbunden ist, und wobei der Innendurchmesser der Gelenkpfanne größer ist als der Außendurchmesser des Hauptkörpers des Gelenkelements.

Bei thermischer Beanspruchung kommt es zu Bewegungen der auskragenden Platte relativ zur Decken-/Bodenplatte. Ohne weitere Vorkehrungen können diese Bewegungen zu einem Bruch und zur Zerstörung des Balkons führen- Das erfindungsgemäße Kragplattenanschlusselement ist mit Gelenkelementen versehen, die diese Relativbewegung in einer Kippbewegung aufnehmen und auf diese Weise eine zu starke Belastung des Materials verhindern. Damit die genannte Kippbewegung ohne Deformation des Gelenkelements erfolgen kann, darf sich der Beton sowohl der auskragenden Platte als auch der Decken-/Bodenplatte nicht fest mit dem Gelenkelement verbinden. Nur in diesem Fall ist gewährleistet, dass sich die jeweilige aus Beton gefertigte Platte relativ zu dem Gelenkelement bewegen kann.

Aus der EP 1 225 282 A2 sind unter Verwendung einer Gießform hergestellte Betondrucketemente bekannt, die zusammen mit der Gießform in das Bauteil eingebaut werden, wobei die Gießform als Gleitschicht wirkt. Bei einer thermischen Ausdehnung der auskragenden Platte findet also eine Bewegung des Druckelements einschließlich der Gießform relativ zu dem umgebenden Gebäudeteil, also relativ zur Decken-/Bodenplatte bzw. zur auskragenden Platte statt. Durch die dabei auftretende Reibung zwischen Gießform und umgebenden Beton kann es zu Ermüdungsbrüchen im Beton kommen.

Um diesen Nachteil zu überwinden wird gemäß der vorliegenden Erfindung eine zu dem Endabschnitt des Gelenkelements formschlüssige Gelenkpfanne verwendet, deren Innendurchmesser größer ist als der Außendurchmesser des Hauptkörpers des Gelenkelements. Dadurch wird eine Bewegung des Gelenkelements in der Gelenkpfanne ermöglicht, während die Gelenkpfanne selbst sich relativ zu dem umgebenden Betonbauteil nicht bewegt Dadurch wird die Belastung des Betons der auskragenden Platte bzw. der Decken-/Bodenplatte deutlich verringert, was in eine stark erhöhte Lebensdauer mündet.

Bei den unter Verwendung einer Gießform hergestellten Betondruckelementen der EP 1 225 282 A2 stimmen der Innendurchmesser des Gleitmittels, also der Innendurchmesser der Gießform, und der Außendurchmesser des eigentlichen Betondruckelements im Wesentlichen überein. Selbstverständlich besteht bei genauer Betrachtung ein im mathematischen Sinn infinitesimaler Unterschied zwischen den beiden Durchmessern, dieser spielt aber für die Funktion des Druckelements im Rahmen der vorliegenden Erfindung keine Rolle.

Durch die formschlüssige Ausgestaltung der Gelenkpfanne gemäß der vorliegenden Erfindung wird eine Kippbewegung des Gelenkelements in eine definierte Richtung sichergestellt. Unter dem Begriff "formschlüssig" ist dabei zu verstehen, dass die Kontaktfläche der Gelenkpfanne zu dem Gelenkelement die selbe Krümmung aufweist wie der entsprechende Endabschnitt des Gelenkelements.

Daneben werden bei Verwendung einer Gelenkpfanne definierte Gleitbedingungen vorgegeben, da die Materialien von Gelenkelement und Gelenkpfanne bekannt sind. Bildet hingegen wie bei der von der EP 1 225 282 A2 vorgeschlagenen Lösung der Beton die Gelenkpfanne aus, so sind die Gleiteigenschaften der Gelenkpfanne nicht bekannt, da Güte und Qualität des Betons in diesem Bereich nicht sicher definiert sind.

Zur Verwirklichung der Vorteile der vorliegenden Erfindung ist bereits eine geringfügige Differenz der genannten Durchmesser ausreichend. Der Unterschied muss lediglich so groß sein, dass eine Kippbewegung des Gelenkelements bei unveränderter Position der Gelenkpfanne möglich ist. Andererseits darf die Differenz der Durchmesser nicht zu groß werden, da in diesem Fall das Gelenkelement auch translatorische Bewegungen relativ zu der Gelenkpfanne ausführen kann, was in einem Verkippen oder Verklemmen des Gelenkelements resultiert.

Gemäß einer bevorzugten Ausführungsform der vorliegenden Erfindung ist daher der Innendurchmesser der Gelenkpfanne zumindest um 1 % größer, besonders bevorzugt 2% größer, insbesondere 3% größer als der Außendurchmesser des Hauptkörpers des Gelenkelements.

Gemäß einer weiteren besonders bevorzugten Ausführungsform der vorliegenden Erfindung ist der Innendurchmesser der Gelenkpfanne zumindest um 5% größer, besonders bevorzugt 7% größer, insbesondere 10% größer als der Außendurchmesser des Hauptkörpers des Gelenkelements.

Gemäß einer weiteren bevorzugten Ausführungsform der vorliegenden Erfindung ist der Innendurchmesser der Gelenkpfanne zumindest um 15% größer, besonders bevorzugt 25% größer als der Außendurchmesser des Hauptkörpers des Gelenkelements.

Die besten Resultate werden für Druckelemente erzielt, bei denen der Innendurchmesser der Gelenkpfanne zwischen 6% und 9% größer ist als der Außendurchmesser des Hauptkörpers des Gelenkelements.

Bei thermischer Beanspruchung erfolgt eine Volumenveränderung der auskragenden Platte. Diese Ausdehnung oder Verkürzung geschieht zum weit überwiegenden Teil in Richtung der Hauptachse der auskragenden Platte. Bei den in den gemäßigten Breiten auftretenden Temperaturschwankungen dehnt sich ein aus Beton gefertigter Balkon um mehrere Millimeter aus, was zu erheblichen Druckzwängen in den Druckstäben führt. Bei einem mehrere Meter langen Balkon ergibt sich so beispielsweise eine Ausdehnung in Horizontalrichtung von nahezu einem Zentimeter, in Vertikalrichtung aber nur um Bruchteile von Millimetern oder im Extremfall um wenige Millimeter.

In ihrer allgemeinsten Form weisen die Endabschnitte des Gelenkelements gemäß der vorliegenden Erfindung daher lediglich entlang einer Richtung eine positive Krümmung auf. Das Gelenkelement ist vorteilhafterweise so angeordnet, dass die positive Krümmung beider Endabschnitte entlang der horizontalen Richtung, also in Richtung der größten Längenveränderung der auskragenden Platte, zu liegen kommt. Das Gelenkelement ist in diesem Fall spiegelsymmetrisch zu einer Spiegelebene senkrecht zur Hauptachse des Gelenkelements.

Der Radius des Kreises, durch den die positive Krümmung der Endabschnitte in horizontaler Richtung beschrieben werden kann, ist bevorzugt größer als der halbe Durchmesser des Gelenkelements.

Gemäß einer weiteren bevorzugten Ausführungsform der vorliegenden Erfindung stellt der Kreis, durch den die positive Krümmung der Endabschnitte in horizontaler Richtung beschrieben werden kann, nur eine gedachte Umhüllende der Endabschnitte dar. In der tatsächlichen Ausprägung wird mittig in dem Endabschnitt eine Kerbe angebracht. Eine solche Einkerbung stabilisiert und fixiert das Gelenkelement, da durch die Kerbe der Mittelpunkt der Kippbewegung des Gelenkelements definiert wird. Das Gelenkelement kippt immer um die Einkerbung, wodurch ein Auswandern des Gelenkelements durch Kippbewegungen verhindert wird.

Da eine geringfügige Verdrehung der auskragenden Platte auch in der vertikalen Richtung erfolgt, weisen die Endabschnitte des Gelenkelements vorteilhafterweise entlang von zwei Richtungen positive Krümmungen auf. Eine auch in vertikaler Richtung positive Krümmung der Endabschnitte erweist sich auch als vorteilhaft im Zusammenhang mit den nachfolgend noch beschriebenen Scherkräften.

Der Radius des Kreises, durch den die positive Krümmung der Endabschnitte in vertikaler Richtung beschrieben werden kann, ist grundsätzlich beliebig, bevorzugt ist er aber größer als die halbe Ausdehnung des Gelenkelements in Längsrichtung.

Besonders bevorzugt werden Ausführungsformen, bei denen die beiden - Krümmungen der Endabschnitte des Gelenkelements entlang beider Richtungen gleich groß sind. In diesem Fall besitzen die Endabschnitte des Gelenkelements die Form eines Kugelabschnitts.

Gemäß einer weiteren besonders bevorzugten Ausführungsform der vorliegenden Erfindung sind beide Endabschnitte des Gelenkelements mit einem Gleitmittel ausgestattet. Neben der formschlüssigen Gelenkpfanne ist in diesem Fall also ein weiteres Gleitmittel vorgesehen. Bevorzugt handelt es sich bei dem weiteren Gleitmittel um eine Beschichtung, die einen geringen Reibungskoeffizienten zum Beton aufweist und auf diese Weise ein Gleiten der benachbarten Oberflächen ermöglicht. Gemäß einer besonders bevorzugten Ausführungsform handelt es sich bei der Beschichtung um ein Trennmittel, das eine haftende Verbindung zwischen Gelenkstückendabschnitt und Beton gänzlich verhindert.

Besonders bevorzugt werden zwei zu den Endabschnitten des Gelenkelements formschlüssige Gelenkpfannen verwendet. In diesem Fall erfolgt die Kippbewegung des Gelenkelements sowohl relativ zur auskragenden Platte als auch relativ zur Decken-/Bodenplatte in definierter Weise.

Um die Reibung zwischen Gelenkelement und Gelenkpfanne möglichst weit zu erniedrigen, werden gemäß einer bevorzugten Ausführungsform der vorliegenden Erfindung die Endabschnitte des Gelenkelements, die mit einer formschlüssigen Gelenkpfanne ausgestattet sind, mit einer Beschichtung versehen, die einen niedrigen Reibungskoeffizienten zu dem Material der Gelenkpfannen besitzt.

Erwähnt werden soll an dieser Stelle auch, dass selbstverständlich auch eine besonders glatte Oberfläche der Endabschnitte des Gelenkelements die Reibung sowohl zum Beton als auch zur Gelenkpfanne herabsetzt und damit eine besonders vorteilhafte Ausgestaltung der vorliegenden Erfindung darstellt.

Die oben angesprochenen Beschichtungen des Gelenkelements werden üblicherweise durch ein Tauchen des Gelenkelements in das Beschichtungsmittel aufgebracht. Dabei wird benachbart zu dem jeweiligen Endabschnitt ein Gummiring um den Hauptkörper des Gelenkelements angebracht, durch den der für die Kippbewegungen des Gelenkelements nach dessen Einbau in den Isolierkörper erforderliche Freiraum bereitgestellt wird. Daneben erfüllt der Gummiring auch die Funktion einer Dichtung und verhindert das Eindringen von Beton zwischen das Gelenkelement und den Isolierkörper.

Gemäß einer weiteren besonders bevorzugten Ausführungsform der vorliegenden Erfindung ragt die Gelenkpfanne zumindest in Teilbereichen über die Oberfläche des Endabschnitts des Gelenkelements hinaus.

Bevorzugt sind die über die Oberfläche des Endabschnitts des Gelenkelements hinausragenden Teilbereiche so geformt, dass sie eine Dichtung zwischen der Decken-/Bodenplatte und dem quaderförmigen Isolierkörper bzw. der auskragenden Platte und dem quaderförmigen Isolierkörper bilden. Besonders bevorzugt werden Gelenkpfannen, deren über die Oberfläche der Gelenkelemente hinausragenden Teilbereiche eine umlaufende Wölbung aufweisen. Durch diese Wölbung können die Gelenkpfannen mit einer gewissen Vorspannung in das Kragplattenanschlusselement eingebaut werden. Dadurch erfolgt eine Abdichtung der Fugen zwischen Isolierkörper und Hauptkörper des Gelenkelements bereits vor dem ersten Kontakt mit dem Beton.

Nach dem Einbau werden die genannten Teilbereiche durch den Druck des Betons an die Oberfläche des Isolierkörpers gepresst. Dadurch wird ein Eindringen von Schlämmen des Betons in die Fuge zwischen Isolierkörper und Hauptkörper des Gelenkelements verhindert. Der die Gelenkstelle umgebende Beton würde bei einem Eindringen der Schlämme in die Fuge zwischen Isolierkörper und Hauptkörper in sehr grobkörniger Form aushärten, da in diesem Bereich das in die Fuge eingedrungene Feinmaterial fehlt. Dies führt zu einem Beton minderer Qualität und bewirkt eine schnelle Alterung bzw. eine Bruchgefahr. Aufgrund der beschriebenen Abdichtung der Fuge durch die Gelenkpfannen kann der Beton in unveränderter Zusammensetzung aushärten, wodurch eine Bruchgefahr an diesen Stellen ausgeschlossen ist.

Gemäß einer weiteren besonders bevorzugten Ausführungsform der vorliegenden Erfindung ist eine weitere um das Gelenkelement umlaufende Dichtung vorgesehen. Es handelt sich um eine dauerelastische Versiegelung der Fuge zwischen Isolierkörper und Hauptkörper des Gelenkelements durch Verkleben und Abdichten. Diese Dichtung besteht aus einer Klebemasse, wobei als Klebemasse jede Art von Material mit einer guten Klebehaftung an dem Material der Gelenkpfanne und mit einer guten Klebehaftung an dem Material des Gelenkelements verwendet werden kann. Beispielsweise können Silicon-Kleber ebenso zum Einsatz kommen wie 2-Komponenten-Kleber auf Polyurethan-Basis. Daneben kann aber auch ein vorgefertigter Dichtungsring verwendet werden. Durch die genannten Dichtungen wird das Eindringen von Schlämmen des Betons in die Fuge zwischen Isolierkörper und Hauptkörper des Gelenkelements noch besser verhindert. Als zusätzlicher Effekt ergibt sich, dass die Gelenkpfannen durch die klebenden Dichtungen an dem Gelenkelement befestigt werden können. Diese elastische Verbindung zwischen Gelenkpfanne und Gelenkelement bleibt auch beim Auftreten von Relativbewegungen zwischen auskragender Platte und Boden-/Deckenplatte bestehen. Da die Gelenkpfanne fest mit dem umgebenden Beton verbunden ist, kann sich das Gelenkelement trotzdem frei relativ zu der Gelenkpfanne bewegen.

Gemäß einer weiteren besonders bevorzugten Ausführungsform der vorliegenden Erfindung sind zwei zusätzliche um das Gelenkelement umlaufende Dichtungen vorgesehen. Eine Dichtung ist dabei dem decken-/bodenplattenseitigen Endabschnitt und die zweite Dichtung dem kragplattenseitigen Endabschnitt des Gelenkelements benachbart. Dadurch wird die Fuge zwischen Gelenkelement und Isolierkörper von beiden Seiten her abgedichtet.

Damit die Kippbewegung des Gelenkelements definiert erfolgen kann, muss der Beton fest mit der jeweiligen Gelenkpfanne verbunden sein. In diesem Fall macht die Gelenkpfanne die Bewegung des Betons, also z. B. die Bewegung der auskragenden Platte, mit und bewegt sich somit relativ zum Gelenkelement. Aufgrund der Formgebung von Gelenkpfanne und Gelenkelement wird auf diese Weise eine Kippbewegung des Gelenkelements bewirkt.

Gemäß einer besonders bevorzugten Ausführungsform der vorliegenden Erfindung weist die Gelenkpfanne daher zumindest in Teilbereichen noppenartige Erhebungen auf, die in die Decken-/Bodenplatte bzw. in die auskragende Platte hineinragen. Dadurch kommt es zu einer festen Verbindung der Gelenkpfanne mit dem Beton, wodurch eine Bewegung der Gelenkpfanne zusammen mit dem Beton relativ zu dem Gelenkelement erfolgen kann.

Gemäß einer weiteren bevorzugten Ausführungsform der vorliegenden Erfindung sind die noppenartigen Erhebungen an der dem Endabschnitt des Gelenkelements zugewandten Seite hohl ausgestaltet. In diese Vertiefungen der Gelenkpfanne kann ein Vorrat an Beschichtungsmittel eingebracht werden, durch den eine gute Gleitfähigkeit des Gelenkelements in der Gelenkpfanne über einen längeren Zeitraum sicher gestellt werden kann.

Gemäß einer weiteren besonders bevorzugten Ausführungsform der vorliegenden Erfindung sind die oben beschriebenen, über die Oberfläche des Endabschnitts des Gelenkelements hinausragenden Teilbereiche der Gelenkpfanne so geformt, dass sie in Teilbereichen von der Decken-/Bodenplatte bzw. der auskragenden Platte umschlossen sind. Dadurch kommt es zu einer weiter verfestigten Verbindung der Gelenkpfanne mit dem Beton, wodurch eine Bewegung der Gelenkpfanne relativ zum Beton verhindert wird.

Die Gelenkpfannen bestehen bevorzugt aus Blech, Teflon, Aluminium, Edelstahl, einem teflonbeschichteten Blech, einer Kunststofffolie und/oder einer teflonbeschichteten Folie. Grundsätzlich kann das Material der Gelenkpfanne selbsttragend sein oder es handelt sich um ein flexibles Material, das erst durch den Beton in die Form einer Gelenkpfanne gepresst wird. Grundsätzlich soll das Material der Gelenkpfannen eine hohe Festigkeit aufweisen und gleichzeitig einen niedrigen Reibungskoeffizienten zu dem Material des Gelenkelements besitzen.

Der Hauptkörper des Gelenkelements kann grundsätzlich eine beliebige Form aufweisen. Bevorzugt ist er quaderförmig oder zylindrisch ausgestaltet. Insbesondere kann der Durchmesser des Hauptkörpers beliebig variiert und so den vorherrschenden statischen Verhältnissen in einem weiten Bereich angepasst werden.

Der im eingebauten Zustand auf das Gelenkelement wirkende starke Druck sollte möglichst gleichmäßig auf das umgebende Material übertragen werden. Dies erfolgt in besonders günstiger Weise, wenn der Hauptkörper des Gelenkelements eine zylindrische Form aufweist, da in diesem Fall die Kraftübertragung radialsymmetrisch geschieht. Bei abgeflachten Oberflächen erfolgt keine gleichmäßige Kraftübertragung, wodurch es zu einem Bruch des Gelenkelements kommen kann. Der Hauptkörper des Gelenkelements ist daher besonders bevorzugt zylindrisch ausgestaltet, er weist also in diesem Fall einen kreisförmigen Querschnitt auf.

Es soll an dieser Stelle bemerkt werden, dass die als Druckelemente wirkenden Gelenkelemente gemäß der vorliegenden Erfindung in bekannter Weise möglichst nah an der Unterseite der auskragenden Platte in das Kragplattenanschlusselement eingebaut werden. Die Druckelemente dienen der Aufnahme des Drehmoments, das durch die auskragende Platte auf die Decken-/Bodenplatte ausgeübt wird. Aus diesem Grund soll ein möglichst großer vertikaler Abstand zwischen Zugstäben einerseits und Druckelementen andererseits eingehalten werden. Je größer nämlich dieser Abstand ist, umso größer sind die Kräfte, die von den Zug- bzw. Druckelementen aufgenommen werden können.

Andererseits muss der Einbau der als Druckelemente wirkenden Gelenkelemente in jedem Fall oberhalb der Stahlbewehrung der Decken-/Bodenplatte erfolgen, da es ansonsten leicht zum Bruch des Betons im Grenzbereich zwischen Decken-/Bodenplatte und auskragender Platte kommen kann. Um einen möglichst vorteilhaften Kompromiss zwischen diesen beiden gegenläufigen Anforderungen zu erreichen, wird der Hauptkörper des Gelenkelements gemäß der vorliegenden Erfindung bevorzugt mit einer zur Unterseite der auskragenden Platte hin abgeflachten Form ausgestattet. Eine solche Form erlaubt eine Platzierung des Gelenkelements möglichst nah an der Unterseite der auskragenden Platte. Ein Abflachen der Form um 5 mm ermöglicht beispielsweise einen um 3 mm nach unten versetzten Einbau des Gelenkelements. Gemäß einer bevorzugten Ausführungsform der vorliegenden Erfindung weist der Hauptkörper des Gelenkelements daher im Wesentlichen einen Kreisabschnitt als Querschnitt auf.

Gemäß einer weiteren bevorzugten Ausführungsform der vorliegenden Erfindung weist der Hauptkörper des Gelenkelements im Wesentlichen einen rechteckigen Querschnitt auf, wobei eine Seite des Rechtecks durch einen Kreisabschnitt ersetzt ist. Diese Ausführungsform bringt ebenso wie die nachfolgend beschriebene Ausgestaltung des Gelenkelements in Form von mehreren Teilelementen besondere Vorteile bei der Aufnahme der auftretenden Scherkräfte mit sich.

In den genannten Fällen, in denen der Querschnitt des Hauptkörpers des Gelenkelements von einem Kreis abweicht, ist die Gelenkpfanne mit einer entsprechenden formschlüssigen Vertiefung ausgestattet. Besitzt das Gelenkelement beispielsweise einen Kreisabschnitt als Querschnitt, so weist die dem Gelenkelement zugewandte Seite der Gelenkpfanne eine in Krümmung und Querschnitt dem Gelenkelement entsprechende Vertiefung auf. Durch den geraden Teil des Kreisabschnitts wird ein axiales Verdrehen des Gelenkelements verhindert.

Da das Gelenkelement neben der Umsetzung der Relativbewegung von auskragender Platte zu Decken-/Bodenplatte in eine Kippbewegung auch die Funktion eines Druckelements erfüllt, ist das Gelenkelement gemäß einer besonders bevorzugten Ausführungsform der vorliegenden Erfindung aus einem hochfesten Material, insbesondere aus Faserbeton oder Keramik gefertigt.

Eine gleitende Bewegung des Gelenkelements entlang seiner Kontaktflächen mit dem Beton ist trotz der genannten Vorkehrungen zumindest zu Beginn einer solchen Bewegung eine idealisierte Betrachtungsweise. Wie bereits beschrieben, steht das Gelenkelement im eingebauten Zustand unter einem starken Druck. Bei einer Relativbewegung zwischen auskragender Platte und Gebäude muss aus diesem Grund zunächst ein Losbrechmoment überwunden werden. Erst nachdem sich die Kontaktflächen von Gelenkelement und Beton bzw. von Gelenkelement und Gelenkpfanne voneinander gelöst haben, ist eine gleitende Bewegung des Gelenkelements möglich.

Beim Auftreten einer Relativbewegung zwischen auskragender Platte und Gebäude kommt es also vor Überwindung des Losbrechmoments zu starken Scherkräften entlang einer Diagonalen in Richtung der Längsausdehnung des Gelenkelements. Diese Scherkräfte können das Gelenkelement im Extremfall zerstören. Zur Überwindung dieser Problematik ist das Gelenkelement gemäß einer bevorzugten Ausführungsform der vorliegenden Erfindung aus zumindest zwei zueinander formschlüssigen Teilelementen aufgebaut, die über eine Kontaktebene miteinander in Kontakt stehen.

Die auftretenden Scherkräfte können in besonders vorteilhafter Weise von dem Gelenkelement aufgenommen werden, wenn die Teilelemente in Richtung der auftretenden Scherkräfte eine Relativbewegung zueinander ausführen können. Besonders bevorzugt werden daher zwei im Wesentlichen identische Teilelemente, deren Kontaktebene die Längsachse des Hauptkörpers des Gelenkelements umfasst. In diesem Fall ist der Hauptkörper des Gelenkelements aus zwei Halbzylindern aufgebaut. Diese beiden Halbzylinder können sich bei Auftreten von Scherkräften entlang der Hauptachse des Gelenkelements relativ zueinander verschieben und die Scherkräfte auf diese Weise ohne Schaden aufnehmen. Besonders deutlich tritt der genannte Effekt auf, wenn die Kontaktebene senkrecht auf der Ebene der auskragenden Platte steht.

Gemäß einer weiteren besonders bevorzugten Ausführungsform der vorliegenden Erfindung ist das Gelenkelement aus vier im Wesentlichen identischen Teilelementen aufgebaut, wobei jeweils zwei Teilelemente eine gemeinsame Kontaktebene aufweisen. Die beiden Kontaktebenen schneiden sich entlang der Längsachse des Hauptkörpers des Gelenkelements. Bezogen auf den Hauptkörper des Gelenkelements handelt es sich also um vier Viertelzylinder. Durch diese Ausführungsform wird ein weiteres Problem beim Einbau der erfindungsgemäßen Kragplattenanschlusselemente gelöst. Nach dem Betonieren der auskragenden Platte und der Entschalung fällt die Bewehrung, getrieben durch die Schwerkraft, nämlich in die eigene Statik. Dadurch kommt es zu einer Bewegung der auskragenden Platte solange bis die Zugstäbe und die Druckelemente des Kragplattenanschlusselements die treibenden Kräfte aufnehmen. Im Endeffekt kommt es also zu einem leichten Kippen der auskragenden Platte in vertikaler Richtung, wobei das Ausmaß des Abkippens mit dem Abstand zur Decken-/Bodenplatte zunimmt.

Die miteinander in Kontakt stehenden Oberflächen der Teilelemente werden gemäß einer bevorzugten Ausführungsform der vorliegenden Erfindung mit einem Gleitmittel ausgestattet. Bei dem Gleitmittel kann es sich um eine Beschichtung, bevorzugt eine Teflon-Beschichtung handeln, die ein leichtes Gleiten der miteinander in Kontakt stehenden Oberflächen erlaubt. Besonders bevorzugt werden in diesem Zusammenhang Trennmittel verwendet, die eine haftende Verbindung zwischen den Teilelementen des Gelenkelements gänzlich verhindern.

Der längliche, quaderförmige Isolierkörper besteht aus wärmedämmenden Materialien, vorzugsweise aus mineralischen Materialien, nämlich aus Glas- oder Steinwolle. Es ist jedoch durchaus möglich, den Isolierkörper auch aus Polystyrolschaum zu fertigen.

Der Isolierkörper wird in der Regel von den aus dem Stand der Technik bei Kragplattenanschlusselementen bekannten Zugstäben und Querstäben durchsetzt. Bei den Zugstäben kann es sich auch um Zugstababschnitte handeln, an denen die eigentlichen Zugstabteile angeschlossen werden können. Von den Zugstäben werden die in horizontaler Richtung wirkenden Zugkräfte aufgenommen, während von den Querstäben die vertikalen Schubkräfte aufgefangen werden.

Die Gelenkpfannen werden gemäß einer bevorzugten Ausführungsform der vorliegenden Erfindung zusammen mit den Gelenkelementen in das Kragplattenanschlusselement eingebaut. Grundsätzlich können die Gelenkpfannen auf jede beliebige Weise an den Gelenkelementen befestigt werden. Insbesondere können die Gelenkpfannen an den Gelenkelementen angeklebt werden. In diesem Fall kann der Kleber zusätzlich als Schmiermittel dienen. Es ist aber auch an eine Fixierung durch einen Kabelbinder, eine Verdrahtung ähnlich wie bei einem Sektkorken, an ein Verschrauben oder ein Vernieten zu denken. Der Endabschnitt des Gelenkelements weist in diesen Fällen eine entsprechende Aussparung auf. Daneben kann die Befestigung der Gelenkpfannen an den Gelenkelementen auch mit Hilfe der bereits näher beschriebenen um das Gelenkelement umlaufenden Dichtung zwischen Gelenkelement und Isolierkörper erfolgen.

Besonders einfach kann diese Ausführungsform verwirklicht werden, wenn zur Befestigung der Gelenkpfannen an den Gelenkelementen ein Gummiband verwendet wird. Weist das Gummiband eine entsprechend große Vorspannung auf, so werden die Gelenkpfannen fest an den Isolierkörper gepresst und dichten auf diese Weise die Fuge zwischen Gelenkelement und Isolierkörper bereits vor dem Betonieren ab.

Bevorzugt wird daher außerdem eine Ausführungsform, bei der das Gelenkelement eine zentrale Bohrung in Richtung seiner Hauptachse aufweist. Durch diese Bohrung wird ein Gummiband geführt, das an seinen Enden mit den Gelenkpfannen verbunden ist. Die Gelenkpfannen werden auf diese Weise an das Gelenkelement gepresst.

Die Befestigung der Gelenkpfanne an dem Gelenkelement widerspricht nur scheinbar der Beweglichkeit des Gelenkelements in der Gelenkpfanne beim Auftreten von Relativbewegungen der auskragenden Platte. Die bei solchen Relativbewegungen auftretenden Kräfte sind nämlich um Dimensionen größer als die Kraft, mit der die Gelenkpfanne an dem Gelenkelement fixiert wird. Sämtliche oben genannten Befestigungen dienen lediglich dem einfacheren Transport und Einbau der erfindungsgemäßen Kragplattenanschlusselemente. Beim ersten Auftreten einer Relativbewegung der auskragenden Platte wird die Befestigung sofort zerstört oder deformiert und das Gelenkelement kann sich in der Gelenkpfanne in der beschriebenen Weise bewegen.

Von der vorliegenden Erfindung sind selbstverständlich auch Kragplattenanschlusselemente umfasst, die Aussparungen aufweisen, welche zur Aufnahme der Gelenkelemente vorgesehen sind. Diese Aussparungen sind vorteilhafterweise nicht zentral in dem Isolierkörper angebracht, sondern relativ nah an dem Randbereich, der der Unterseite der auskragenden Platte zuzuordnen ist.

Obwohl für die eigentliche Reduktion der Reibung die Dicke der Gelenkpfannen sehr klein sein kann, hat es sich als vorteilhaft gezeigt, die Gelenkpfannen so dick zu gestalten, dass sie ein zusätzliches lsolationselement bilden. Die Isolationswerte von Kunststoff sind nämlich wesentlich höher als der Isolationswert von Beton oder Metall.

Das erfindungsgemäße Kragplattenanschlusselement ist in der Fertigung gegenüber den heute bekannten Lösungen wesentlich kostengünstiger. Die Herstellung der Druckelemente durch Strangpressen, Schneiden und Schleifen erlaubt die Produktion einer Vielzahl von Formvarianten. Im Vergleich zu den sonst üblichen Druckstäben oder anders gestalteten Druckelementen sind die hier aufgezeigten Gelenkelemente aus Faserbeton oder Keramik wesentlich leichter. Entsprechend müssen auch weniger Vorkehrungen für den Transport und die Lagerung vorgesehen werden. Hinzu kommen große Einsparungen an Metall sowie an Transportkosten. Neben diesen Kosten senkenden Wirkungen wird aber auch die Kräfteübertragung erheblich verbessert. Die Bewegungen erfolgen nicht durch eine Verformung von Druckstäben, sondern durch eine Kippbewegung des Gelenkelements. Entsprechend treten weniger Zerstörungen auf und man erhält somit ein besseres, den Bewegungen folgendes Element, das eine höhere Lebensdauer bei gleichzeitig geringeren Kosten verspricht

### Kurze Beschreibung der Zeichnungen

Die Erfindung soll nachfolgend anhand von Ausführungsbeispielen im Zusammenhang mit den Zeichnungen näher erläutert werden. Es zeigen
- Fig.1: einen Querschnitt durch ein Kragplattenanschlusselement mit Gelenkelement ohne Gelenkpfannen entlang der Hauptachse des Gelenkelements; ohne
- Fig.2: einen Querschnitt durch ein erfindungsgemäßes Kragplaftenanschlusselement mit Gelenkelement und Gelenkpfannen entlang der Hauptachse des Gelenkelements;
- Fig. 3: eine Gelenkpfanne in Draufsicht;
- Fig. 4: einen Schnitt durch die Gelenkpfanne der Figur 3 entlang der Linie A-A;
- Fg. 5: einen Schnitt durch die Gelenkpfanne der Figur 3 entlang der Linie B-B;
- Fig. 6: Querschnitte durch vier verschiedene Gelenkelemente jeweils senkrecht zur Hauptachse des Gelenkelements;
- Fig. 7: einen Querschnitt durch ein Kragplattenanwhlusselement gemäß der vorliegenden Erfindung mit Gelenkelement und Gelenkpfanne entlang der Hauptachse des Gelenkelements in horizontaler Richtung;
- Fig. 8: einen Querschnitt durch ein Kragplattenanschlusselement gemäß der vorliegende Erfindung mit Gelenkelement und Gelenkpfanne entlang der Hauptachse des Gelenkelements in vertikaler Richtung:
- Fg. 9: einen Querschnitt durch ein Kragplattenanschlusselement gemäß der vorliegenden Erfindung mit Gelenkelement und Gelenkpfanne entlang der Hauptachse des Gelenkelements in vertikaler Richtung.

### Wege zur Ausführung der Erfindung

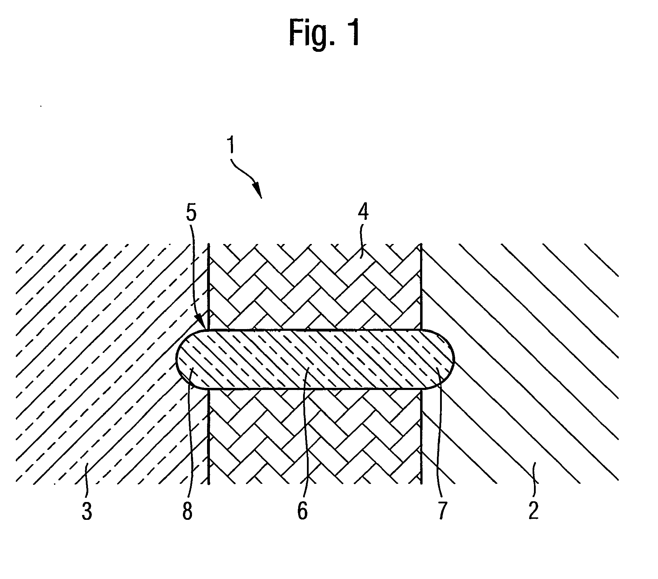

Figur 1 zeigt einen Querschnitt durch ein Kragplattenanschlusselement mit Gelenkelement ohne Gelenkpfannen. Das Kragplattenanschlusselement 1, das die Decken-/Bodonplatte 2 und die auskragende Platte 3 verbindet, umfasst den quaderförmigen Isolierkörper 4 und das Gelenkelement 5. Der Isolierkörper 4 wird in der Regel von den aus dem Stand der Technik bei Kragplattenanschlusselementen bekannten Zugstäben und Querstäben durchsetzt, auf deren Darstellung zur Entlastung der Zeichnung verzichtet wurde.

Das Gelenkelements 5 besteht aus dem Hauptkörper 6, dem decken-/bodenplattenseitigen Endabschnitt 7 und dem kragplattenseitigen Endabschnitt 8. Aus der Figur 1 wird deutlich, dass das Gelenkelement 5 den quaderförmigen Isolierkörper 4 durchsetzt, wobei der Hauptkörper 6 des Gelenkelements 5 im Wesentlichen von dem quaderförmigen Isolierkörper 4 umschlossen ist und die Endabschnitte 7, 8 in die auskragende Platte 3 und in die Decken-/Bodenplatte 2 hineinragen. Die Oberfläche der Endabschnitte 7, 8 des Gelenkelements 5 weisen entlang der Richtung der Hauptachse des quaderförmigen isolierkörpers 4 eine positive Krümmung auf.

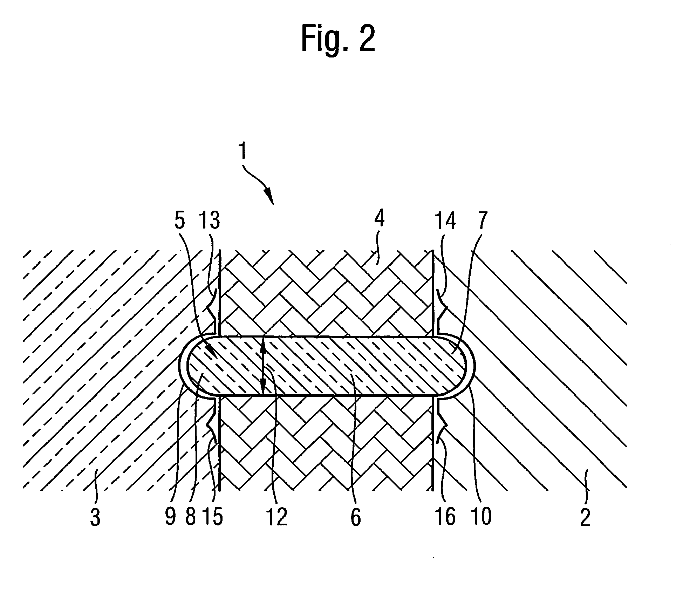

Figur 2 zeigt einen Ausschnitt eines Querschnitts durch ein erfindungsgemäßes Kragplattenanschiusselement mit Gelenkelement. Dabei handelt es sich um das in Figur 1 gezeigte Kragplattenanschlusselement mit dem Unterschied, dass zwei zu den Endabschnitten des Gelenkelements formschlüssige Gelenkpfannen 9, 10 vorgesehen sind. In der Figur 2 sind zwischen den Endabschnitten 7, 8 und den Gelenkpfannen 9, 10 Zwischenräume zu sehen, die der deutlicheren Sichtbarkeit der einzelnen Elemente in der Figur dienen. In der Realität sind diese Zwischenräume aber minimal.

Ebenfalls in der Figur 2 ist die Tatsache dargestellt, dass die Gelenkpfannen zumindest in Teilbereichen 13, 14, 15, 16 über die Oberfläche der Endabschnitte 7, 8 des Gelenkelements hinausragen können. Durch den Druck des Betons werden die Teilbereiche 13, 14, 15, 16 an die Oberfläche des Isolierkörpers 4 gepresst. Dadurch wird ein Eindringen von Schlämmen des Betons in die Fugen zwischen Isorlierkörper 4 und Hauptkörper 6 des Gelenkelements 5 verhindert. Der die Gelenkstelle umgebende Beton kann so in unveränderter Zusammensetzung aushärten, wodurch eine Bruchgefahr an diesen Stellen ausgeschlossen wird.

Die in Figur 2 dargestellten über die Oberfläche der Endabschnitte 7, 8 des Gelenkelements hinausragenden Teilbereiche 13, 14, 15, 16 der Gelenkpfannen weisen eine umlaufende Wölbung auf. Durch diese Wölbung können die Gelenkpfannen mit einer gewissen Vorspannung in das Kragplattenanschlusselement eingebaut werden. Dadurch erfolgt eine Abdichtung der Fugen zwischen Isolierkörper 4 und Hauptkörper 6 des Gelenkelements 5 bereits vor dem ersten Kontakt mit dem Beton. Der Außendurchmesser des Hauptkörpers des Gelenkelements ist mit dem Bezugszeichen 12 bezeichnet.

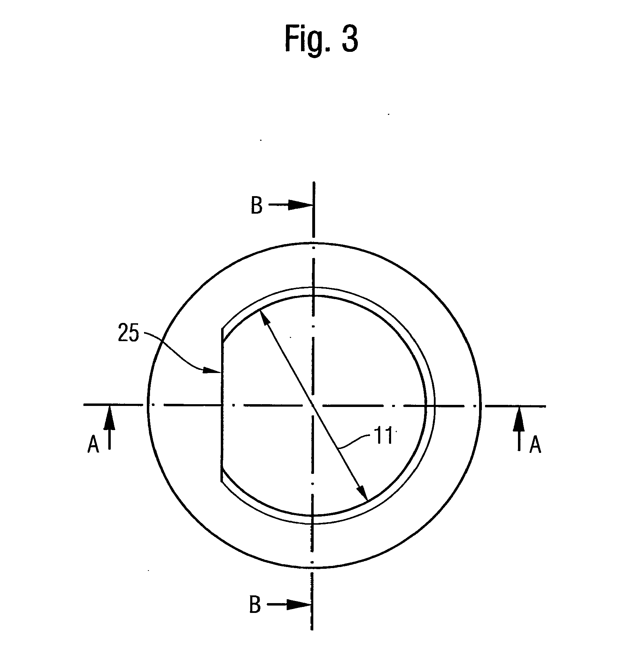

Figur 3 zeigt schematisch eine Gelenkpfanne in Draufsicht. Gezeigt ist eine Gelenkpfanne, die zusammen mit einem Gelenkelement verwendet wird, weiches einen Kreisabschnitt als Querschnitt des Hauptkörpers besitzt. Die dem Gelenkelement zugewandte Seite der Gelenkpfanne weist eine in Krümmung und Querschnitt dem Gelenkelement entsprechende Vertiefung auf. Durch den geraden Teil 25 des Kreisabschnitts wird ein axiales Verdrehen des Gelenkelements verhindert. Der Innendurchmesser der Gelenkpfanne ist mit dem Bezugszeichen 11 bezeichnet.

Der in Figur 2 gezeigte Außendurchmesser des Hauptkörpers des Gelenkelements beträgt in dem dargestellten Ausführungsbeispiel 40 mm. Der in Figur 3 gezeigte Innendurchmesser der Gelenkpfanne beträgt in dem dargestellten Ausführungsbeispiel 43 mm und ist damit um 7,5% größer als der Außendurchmesser des Hauptkörpers des Gelenkelements.

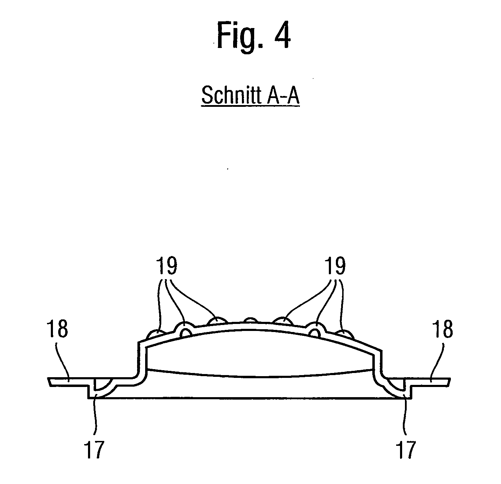

Figur 4 zeigt einen Schnitt durch die in Figur 3 dargestellte Gelenkpfanne entlang der Linie A-A. Zu erkennen sind die über die Oberfläche des Endabschnitts des Gelenkelements hinausragenden Teilbereiche 17, die so geformt sind, dass sie eine Dichtung zwischen der Decken-/Bodenplatte und dem quaderförmigen Isolierkörper bzw. der auskragenden Platte und dem quaderförmigen Isolierkörper bilden. Daneben sind auch die Teilbereiche 18 der Gelenkpfanne gezeigt, die von der Decken-/Bodenplatte bzw. der auskragenden Platte umschlossen werden. Die noppenartigen Erhebungen 19 ragen in die Decken-/Bodenplatte bzw. in die auskragende Platte hinein.

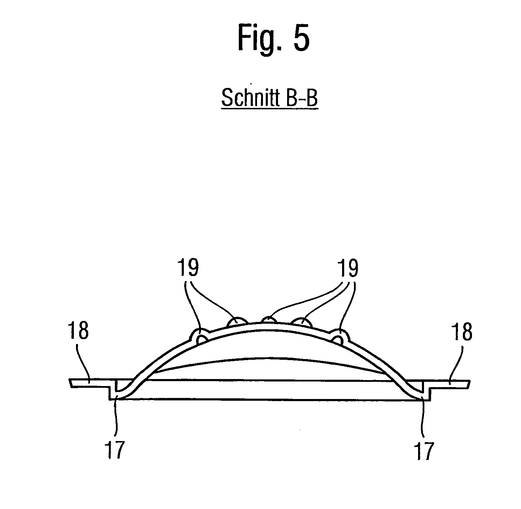

Figur 5 zeigt einen Schnitt durch die in Figur 3 dargestellte Gelenkpfanne entlang der Linie B-B. Zu erkennen sind die über die Oberfläche des Endabschnitts des Gelenkelements hinausragenden Teilbereiche 17, die so geformt sind, dass sie eine Dichtung zwischen der Decken-/Bodenplatte und dem quaderförmigen Isolierkörper bzw. der auskragenden Platte und dem quaderförmigen Isolierkörper bilden. Daneben sind auch die Teilbereiche 18 der Gelenkpfanne gezeigt, die von der Decken-/Bodenplatte bzw. der auskragenden Platte umschlossen werden. Die noppenartigen Erhebungen 19 ragen in die Decken-/Bodenplatte bzw. in die auskragende Platte hinein.

Ein Vergleich der Figuren 4 und 5 zeigt, dass die dargestellte Ausführungsform einer Gelenkpfanne unterschiedliche Krümmungen in horizontaler bzw. vertikaler Richtung aufweist.

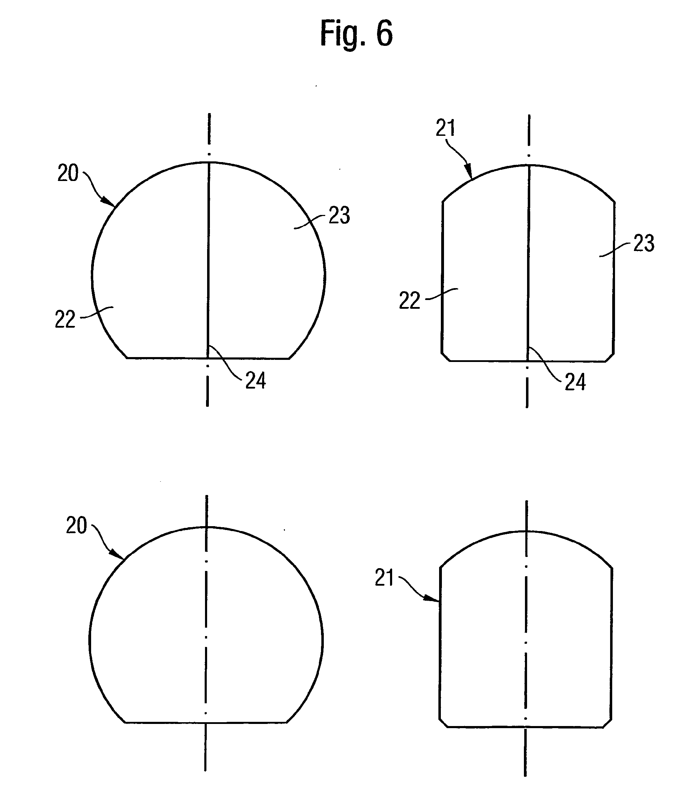

Figur 6 zeigt Querschnitte durch vier verschiedene Gelenkelemente jeweils senkrecht zur Hauptachse des Gelenkelements. Gezeigt ist ein einstückiges Gelenkelement mit einem Kreisabschnitt 20 als Querschnitt, ein einstückiges Gelenkelement mit einem im Wesentlichen rechteckigen Querschnitt 21, wobei eine Seite des Rechtecks durch einen Kreisabschnitt ersetzt ist und die Ecken des rechteckigen Teils abgefast sind, ein aus zwei Teilelementen 22, 23 aufgebautes Gelenkelement mit einem Kreisabschnitt 20 als Querschnitt und ein aus zwei Teilelementen 22, 23 aufgebautes Gelenkelement mit einem im Wesentlichen rechteckigen Querschnitt 21, wobei eine Seite des Rechtecks durch einen Kreisabschnitt ersetzt ist und die Ecken des rechteckigen Teils abgefast sind. Die beiden Teilelemente 22, 23 stehen jeweils über die Kontaktebene 24 miteinander in Kontakt.

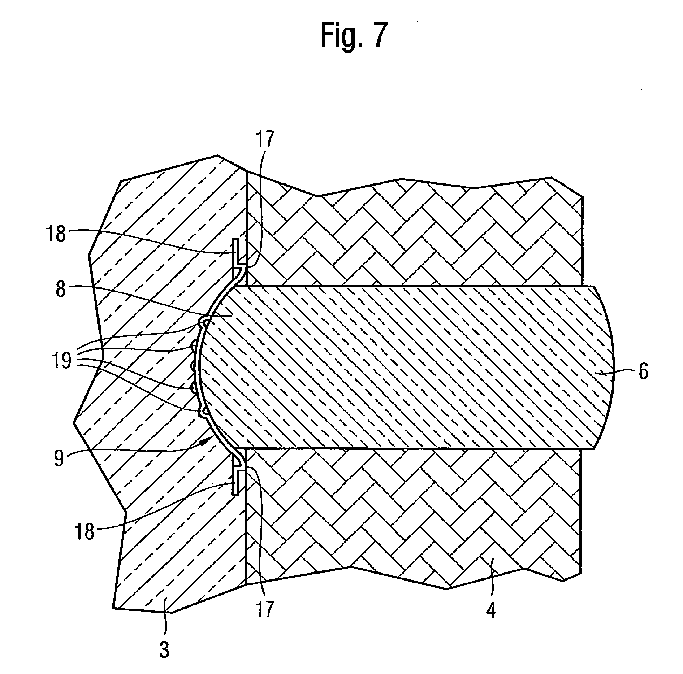

Figur 7 zeigt einen Querschnitt durch ein erfindungsgemäßes Kragplattenanschlusselement mit Gelenkelement und Gelenkpfanne entlang der Hauptachse des Gelenkelements in horizontaler Richtung. Der dargestellte Teil des Gelenkelements umfasst den Hauptkörper 6 und den kragplattenseitigen Endabschnitt 8. Das Gelenkelement durchsetzt den quaderförmigen Isolierkörper 4, wobei der Hauptkörper 6 des Gelenkelements im Wesentlichen von dem quaderförmigen Isolierkörper 4 umschlossen ist und der Endabschnitt 8 in die auskragende Platte 3 hineinragt. Die Oberfläche des Endabschnitts 8 des Gelenkelements weist entlang der Richtung der Hauptachse des quaderförmigen Isolierkörpers 4 eine positive Krümmung auf.

Dargestellt ist auch die Gelenkpfanne 9 mit den über die Oberfläche des Endabschnitts 8 des Gelenkelements hinausragenden Teilbereichen 17, die so geformt sind, dass sie eine Dichtung zwischen der auskragenden Platte 3 und dem quaderförmigen Isolierkörper 4 bilden. Daneben sind auch die über die Oberfläche des Endabschnitts 8 des Gelenkelements hinausragenden Teilbereiche 18 der Gelenkpfanne 9 gezeigt, die von der auskragenden Platte umschlossen werden. Die noppenartigen Erhebungen 19 ragen in die auskragende Platte hinein.

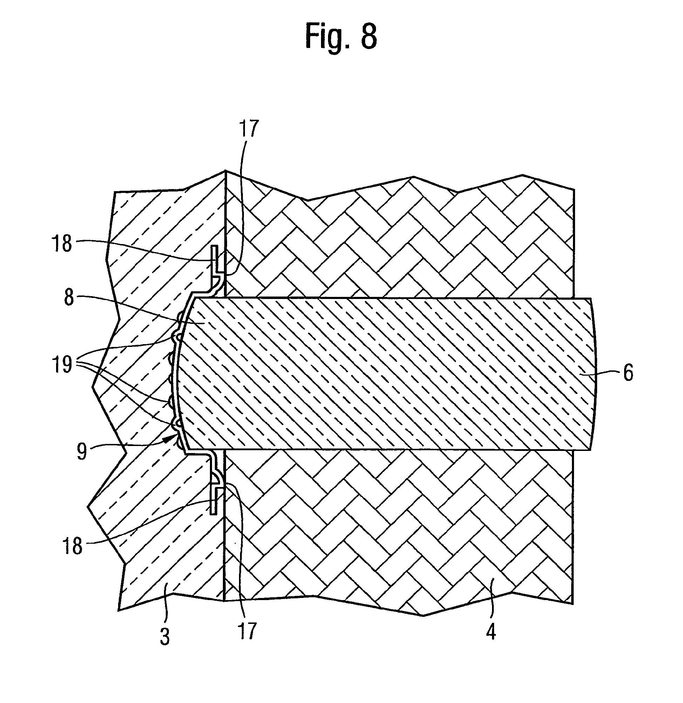

Figur 8 zeigt einen Querschnitt durch ein erfindungsgemäßes Kragplattenanschlusselement mit Gelenkelement und Gelenkpfanne entlang der Hauptachse des Gelenkelements in vertikaler Richtung. Der dargestellte Teil des Gelenkelements umfasst den Hauptkörper 6 und den kragplattenseitigen Endabschnitt 8. Das Gelenkelement durchsetzt den quaderförmigen Isolierkörper 4, wobei der Hauptkörper 6 des Gelenkelements im Wesentlichen von dem quaderförmigen Isolierkörper 4 umschlossen ist und der Endabschnitt 8 in die auskragende Platte 3 hineinragt. Die Oberfläche des Endabschnitts 8 des Gelenkelements weist in vertikaler Richtung eine positive Krümmung auf, die aber geringer ist als die in Figur 7 gezeigte Krümmung in horizontaler Richtung.

Dargestellt ist auch die Gelenkpfanne 9 mit den über die Oberfläche des Endabschnitts 8 des Gelenkelements hinausragenden Teilbereichen 17, die so geformt sind, dass sie eine Dichtung zwischen der auskragenden Platte 3 und dem quaderförmigen Isolierkörper 4 bilden. Daneben sind auch die über die Oberfläche des Endabschnitts 8 des Gelenkelements hinausragenden Teilbereiche 18 der Gelenkpfanne 9 gezeigt, die von der auskragenden Platte umschlossen werden. Die noppenartigen Erhebungen 19 ragen in die auskragende Platte hinein.

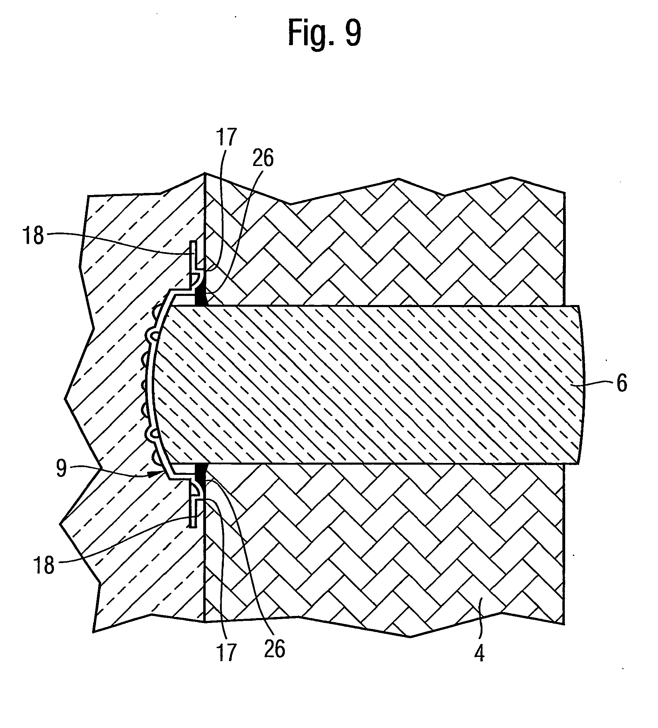

Figur 9 zeigt einen Querschnitt durch ein erfindungsgemäßes Kragplattenanschlusselement mit Gelenkelement und Gelenkpfanne entlang der Hauptachse des Gelenkelements in vertikaler Richtung. Der dargestellte Teil des Gelenkelements umfasst den Hauptkörper 6 und den kragplattenseitigen Endabschnitt 8. Das Gelenkelement durchsetzt den quaderförmigen Isolierkörper 4, wobei der Hauptkörper 6 des Gelenkelements im Wesentlichen von dem quaderförmigen Isolierkörper 4 umschlossen ist und der Endabschnitt 8 in die auskragende Platte 3 hineinragt. Die Oberfläche des Endabschnitts 8 des Gelenkelements weist in vertikaler Richtung eine positive Krümmung auf, die aber geringer ist als die in Figur 7 gezeigte Krümmung in horizontaler Richtung.

Dargestellt ist auch die Gelenkpfanne 9 mit den über die Oberfläche des Endabschnitts 8 des Gelenkelements hinausragenden Teilbereichen 18, die von der auskragenden Platte umschlossen werden. Die über den Endabschnitt 8 des Gelenkelements hinausragenden Teilbereiche 17 sind wiederum so geformt, dass sie eine Dichtung zwischen der auskragenden Platte 3 und dem quaderförmigen Isolierkörper 4 bilden. Die Teilbereiche 17 stellen aber in dieser Ausführungsform nur einen Teil der Dichtung zwischen auskragender Platte 3 und quaderförmigem Isolierkörper 4 dar. Daneben ist nämlich noch eine um das Gelenkelement umlaufende Dichtung 26 vorgesehen. Die Dichtung 26 besteht aus einer Klebemasse, die das Eindringen von Schlämmen des Betons in die Fuge zwischen Isolierkörper und Hauptkörper des Gelenkelements verhindert. Zudem können die Gelenkpfannen durch die klebende Dichtung an dem Gelenkelement 5 für den Einbau des Kragplattenanschlusselements befestigt werden. Diese elastische Verbindung zwischen Gelenkpfanne und Gelenkelement bleibt auch beim Auftreten von Relativbewegungen zwischen auskragender Platte und Boden-/Deckenplatte bestehen. Da die Gelenkpfanne fest mit dem umgebenden Beton verbunden ist, kann sich das Gelenkelement trotzdem frei relativ zu der Gelenkpfanne bewegen.

### Bezugszeichenliste

- 1: Kragplattenanschlusselement
- 2: Decken-/Bodenplatte
- 3: auskragende Platte
- 4: Isolierkörper
- 5: Gelenkelement
- 6: Hauptkörper des Gelenkelements
- 7: decken-/bodenplattenseitiger Endabschnitt des Gelenkelements
- 8: kragplattenseitiger Endabschnitt des Gelenkelements
- 9, 10: Gelenkpfannen
- 11: Innendurchmesser der Gelenkpfanne
- 12: Außendurchmesser des Hauptkörpers
- 13, 14, 15, 16: über die Oberfläche der Endabschnitte des Gelenkelements hinausragende Teilbereiche der Gelenkpfannen
- 17: Dichtung
- 18: von der Decken-/Bodenplatte bzw. der auskragenden Platte umschlossene Teilbereiche der Gelenkpfanne
- 19: noppenartige Erhebungen
- 20, 21: Querschnitte des Hauptkörpers des Gelenkelements
- 22, 23: Teilelemente des Gelenkelements
- 24: Kontaktebenen
- 25: gerader Teil des Kreisabschnitts
- 26: Dichtung

## Patentansprüche

1. Kragplattenanschlusselement (1) zum Verbinden einer Decken-/Bodenplatte (2) und einer auskragenden Platte (3) mit Zugmitteln, Querkraftmitteln, Druckmitteln und einem quaderförmigen Isolierkörper (4), wobei wenigstens ein Druckmittel als ein den quaderförmigen Isolierkörper (4) durchsetzendes Gelenkelement (5) ausgebildet ist, wobei das Gelenkelement (5) einen Hauptkörper (6), einen decken-/bodenplattenseitigen Endabschnitt (7) und einen kragplattenseitigen Endabschnitt (8) umfasst, der Hauptkörper (6) im Wesentlichen von dem quaderförmigen Isolierkörper (4) umschlossen ist und die Endabschnitte (7, 8) im eingebauten Zustand in die auskragende Platte (3) und in die Decken-/Bodenplatte (2) hineinragen, wobei die Oberflächen der beiden Endabschnitte (7, 8) des Gelenkelements (5) jeweils entlang wenigstens einer Richtung eine positive Krümmung aufweisen und zumindest ein Endabschnitt (7, 8) mit einem Gleitmittel ausgestattet ist, wobei es sich bei dem Gleitmittel um eine zu dem Endabschnitt (7, 8) formschlüssige, aus einer Folie bestehende Gelenkpfanne (9, 10) handelt, wobei die Gelenkpfanne (9, 10) im eingebauten Zustand fest mit dem umgebenden Beton verbunden ist, und wobei der Innendurchmesser (11) der Gelenkpfanne (9, 10) größer ist als der Außendurchmesser (12) des Hauptkörpers (6) des Gelenkelements (5).

2. Kragplattenanschlusselement nach Anspruch 1, **dadurch gekennzeichnet, dass** der Innendurchmesser (11) der Gelenkpfanne (9, 10) zumindest um 1 % größer ist als der Außendurchmesser (12) des Hauptkörpers (6) des Gelenkelements (5).

3. Kragplattenanschlusselement nach Anspruch 1, **dadurch gekennzeichnet, dass** der Innendurchmesser (11) der Gelenkpfanne (9, 10) zumindest um 2% größer ist als der Außendurchmesser (12) des Hauptkörpers (6) des Gelenkelements (5).

4. Kragplattenanschlusselement nach Anspruch 1, **dadurch gekennzeichnet, dass** der Innendurchmesser (11) der Gelenkpfanne (9, 10) zumindest um 3% größer ist als der Außendurchmesser (12) des Hauptkörpers (6) des Gelenkelements (5).

5. Kragplattenanschlusselement nach Anspruch 1, **dadurch gekennzeichnet, dass** der Innendurchmesser (11) der Gelenkpfanne (9, 10) zumindest um 5% größer ist als der Außendurchmesser (12) des Hauptkörpers (6) des Gelenkelements (5).

6. Kragplattenanschlusselement nach Anspruch 1, **dadurch gekennzeichnet, dass** der Innendurchmesser (11) der Gelenkpfanne (9, 10) zumindest um 7% größer ist als der Außendurchmesser (12) des Hauptkörpers (6) des Gelenkelements (5).

7. Kragplattenanschlusselement nach Anspruch 1, **dadurch gekennzeichnet, dass** der Innendurchmesser (11) der Gelenkpfanne (9, 10) zumindest um 10% größer ist als der Außendurchmesser (12) des Hauptkörpers (6) des Gelenkelements (5).

8. Kragplattenanschlusselement nach Anspruch 1, **dadurch gekennzeichnet, dass** der Innendurchmesser (11) der Gelenkpfanne (9, 10) zumindest um 15% größer ist als der Außendurchmesser (12) des Hauptkörpers (6) des Gelenkelements (5).

9. Kragplattenanschlusselement nach Anspruch 1, **dadurch gekennzeichnet, dass** der Innendurchmesser (11) der Gelenkpfanne (9, 10) zumindest um 25% größer ist als der Außendurchmesser (12) des Hauptkörpers (6) des Gelenkelements (5).

10. Kragplattenanschlusselement nach einem der vorhergehenden Ansprüche, **dadurch gekennzeichnet, dass** zumindest ein Endabschnitt (7, 8) des Gelenkelements (5) entlang von zwei Richtungen eine positive Krümmung aufweist.

11. Kragplattenanschlusselement nach Anspruch 10, **dadurch gekennzeichnet, dass** die Krümmungen des zumindest einen Endabschnitts (7, 8) des Gelenkelements (5) entlang beider Richtungen gleich groß sind.

12. Kragplattenanschlusselement nach einem der vorhergehenden Ansprüche, **dadurch gekennzeichnet, dass** beide Endabschnitte (7, 8) mit einem Gleitmittel ausgestattet sind.

13. Kragplattenanschlusselement nach Anspruch 12, **dadurch gekennzeichnet, dass** es sich bei dem weiteren Gleitmittel um eine Beschichtung handelt, wobei die Beschichtung einen niedrigen Reibungskoeffizienten zu Beton aufweist.

14. Kragplattenanschlusselement nach Anspruch 13, **dadurch gekennzeichnet, dass** es sich bei der Beschichtung um ein Trennmittel handelt, das eine haftende Verbindung aschen Gelenkstückendabschnitt und Beton verhindert.

15. Kragplattenanschlusselement nach Anspruch 12, **dadurch gekennzeichnet, dass** es sich bei dem weiteren Gleitmittel um eine weitere zu den Endabschnitten (7, 8) des Gelenkelements (5) formschlüssigen Gelenkpfanne (9, 10) handelt.

16. Kragplaltenanschlusselement nach einem der vorhergehenden Ansprüche, **dadurch gekennzeichnet, dass** der/die Endabschnitte (7, 8), die mit den formschlüssige Gelenkpfannen (9. 10) ausgestattet sind, eine Beschichtung aufweisen, die einen niedrigen Reibungskoeffizienten zu dem Material der Gelenkpfannen besitzt.

17. Kragplattenanschlusselement nach einem der vorhergehenden Ansprüche, **dadurch gekennzeichnet, dass** die Gelenkpfanne (9, 10) zumindest In Teilbereichen (13, 14, 15, 16) über die Oberfläche des Endabschnitts (7,8) des Gelenkelements (5) hinausragt.

18. Kragplattenanschlusselement nach Anspruch 17, **dadurch gekennzeichnet, dass** die über die Oberfläche des Endabschnitts (7, 8) des Gelenkelements (5) hinausragenden Teilbereiche (13, 14, 15, 16) so geformt sind, dass sie eine Dichtung (17) zwischen der Decken-/Bodenplatte (2) und dem quaderförmigen Isolierkörper (4) bzw. der auskragenden Platte (3) und dem quaderförmigen Isolierkörper (4) bilden.

19. Kragplattenanschlusselement nach Anspruch 17 oder 18, **dadurch gekennzeichnet, dass** die über die Oberfläche des Endabschnitts (7, 8) des Gelenkelements (5) hinausragenden Teilbereiche (13, 14, 15, 16) so geformt sind, dass sie in Teilbereichen (18) von der Decken-/Bodenplatte (2) bzw. der auskragenden Platte (3) umschlossen sind.

20. Kragplattenanschlusselement nach einem der vorhergehenden Ansprüche, **dadurch gekennzeichnet, dass** die Gelenkpfanne (9, 10) zumindest in Teilbereichen noppenartige Erhebungen (19) aufweist, die in die Decken-/Bodenplatte (2) bzw. in die auskragende Platte (3) hineinragen.

21. Kragplattenanschlusselement nach einem der vorhergehenden Ansprüche, **dadurch gekennzeichnet, dass** die Gelenkpfanne (9, 10) aus Blech, Teflon, Aluminium, Edelstahl, einem teflonbeschichteten Blech, einer Kunststofffolie und/oder einer teflonbeschichteten Folie besteht.

22. Kragplattenanschlusselement nach einem der vorhergehenden Ansprüche, **dadurch gekennzeichnet, dass** der Hauptkörper (6) einen kreisförmigen Querschnitt aufweist.

23. Kragplattenanschlusselement nach einem der Ansprüche 1 bis 21, **dadurch gekennzeichnet, dass** der Hauptkörper (6) im Wesentlichen einen Kreisabschnitt als Querschnitt (20) aufweist.

24. Kragplattenanschlusselement nach einem der Ansprüche 1 bis 21, **dadurch gekennzeichnet, dass** der Hauptkörper (6) im Wesentlichen einen rechteckigen Querschnitt (21) aufweist, wobei eine Seite des Rechtecks durch einen Kreisabschnitt ersetzt ist.

25. Kragplattenanschlusselement nach einem der vorhergehenden Ansprüche, **dadurch gekennzeichnet, dass** das Gelenkelement (5) aus einem hochfesten Material, insbesondere aus Faserbeton oder Keramik besteht.

26. Kragplattenanschlusselement nach einem der vorhergehenden Ansprüche, **dadurch gekennzeichnet, dass** das Gelenkelement (5) aus zumindest zwei zueinander formschlüssigen Teilelementen (22, 23) aufgebaut ist.

27. Kragplattenanschlusselement nach Anspruch 26, **dadurch gekennzeichnet, dass** es sich um zwei im Wesentlichen identische Teilelemente (22, 23) handelt, die eine gemeinsame Kontaktebene (24) aufweisen, wobei die Kontaktebene (24) die Längsachse des Hauptkörpers des Gelenkelements umfasst.

28. Kragplattenanschlusselement nach Anspruch 26 oder 27, **dadurch gekennzeichnet, dass** es sich um vier im Wesentlichen identische Teilelemente handelt, wobei jeweils zwei Teilelemente eine gemeinsame Kontaktebene aufweisen, wobei sich die beiden Kontaktebenen entlang der Längsachse des Hauptkörpers des Gelenkelements schneiden.

29. Kragplattenanschlusselement nach einem der Ansprüche 26 bis 28, **dadurch gekennzeichnet, dass** die Kontaktebenen (24) mit einem Gleitmittel ausgestattet sind.

30. Kragplattenanschlusselement nach einem der vorhergehenden Ansprüche, **dadurch gekennzeichnet, dass** eine um das Gelenkelement (5) umlaufende Dichtung (26) vorgesehen ist.

31. Kragplattenanschlusselement nach einem der vorhergehenden Ansprüche, **dadurch gekennzeichnet, dass** zwei um das Gelenkelement (5) umlaufende Dichtungen (26) vorgesehen sind, wobei eine Dichtung (26) dem deckenfbodenplattenseitigen Endabschnitt (7) und die zweite Dichtung (26) dem kragplattenseitigen Endabschnitt (8) des Gelenkelements (5) benachbart ist.

## Claims

1. A cantilever panel connecting element (1) for joining a ceiling/floor panel (2) and a cantilever panel (3), having tractive means, shearing force means, pressure means, and a cuboid insulating body (4), wherein at least one pressure means is constructed as an articulation element (5) that passes through the cuboid insulating body (4), wherein the articulation element (5) comprises a main body (6), an end section (7) facing the ceiling/floor panel, and an end section (8) facing the cantilever panel, the main body (6) being essentially enclosed in the cuboid insulating body (4), and the end sections (7, 8) protrude into the cantilever panel (3) and into the ceiling/floor panel (2) when fitted, wherein the surfaces of the two end sections (7, 8) of the articulation element (5) each have a positive curvature in at least one direction, and at least one end section (7, 8) is furnished with sliding means, wherein the sliding means is a joint socket (9, 10) consisting of a film, the joint socket (9, 10) being attached in positive locking manner with the end section (7, 8), wherein the joint socket (9, 10) is permanently bonded to the surrounding concrete when fitted, wherein the internal diameter (11) of the joint socket (9, 10) is greater than the external diameter (12) of the main body (6) of the articulation element (5).

2. The cantilever panel connecting element according to claim 1, **characterized in that** the internal diameter (11) of the socket joint (9, 10) is at least 1% larger than the external diameter (12) of the main body (6) of the articulating element (5).

3. The cantilever panel connecting element according to claim 1, **characterized in that** the internal diameter (11) of the socket joint (9, 10) is at least 2% larger than the external diameter (12) of the main body (6) of the articulating element (5).

4. The cantilever panel connecting element according to claim 1, **characterized in that** the internal diameter (11) of the socket joint (9, 10) is at least 3% larger than the external diameter (12) of the main body (6) of the articulating element (5).

5. The cantilever panel connecting element according to claim 1, **characterized in that** the internal diameter (11) of the socket joint (9, 10) is at least 5% larger than the external diameter (12) of the main body (6) of the articulating element (5).

6. The cantilever panel connecting element according to claim 1, **characterized in that** the internal diameter (11) of the socket joint (9, 10) is at least 7% larger than the external diameter (12) of the main body (6) of the articulating element (5).

7. The cantilever panel connecting element according to claim 1, **characterized in that** the internal diameter (11) of the socket joint (9, 10) is at least 10% larger than the external diameter (12) of the main body (6) of the articulating element (5).

8. The cantilever panel connecting element according to claim 1, **characterized in that** the internal diameter (11) of the socket joint (9, 10) is at least 15% larger than the external diameter (12) of the main body (6) of the articulating element (5).

9. The cantilever panel connecting element according to claim 1, **characterized in that** the internal diameter (11) of the socket joint (9, 10) is at least 25% larger than the external diameter (12) of the main body (6) of the articulating element (5).

10. The cantilever panel connecting element according to any of the preceding claims, **characterized in that** at least one end section (7, 8) of the articulation element (5) has a positive curvature in two directions.

11. The cantilever panel connecting element according to claim 10, **characterized in that** the curvatures of the at least one end section (7, 8) of the articulating element (5) are the same size in both directions.

12. The cantilever panel connecting element according to any of the preceding claims, **characterized in that** both end sections (7, 8) are furnished with a sliding means.

13. The cantilever panel connecting element according to claim 12, **characterized in that** the additional sliding means is a coating, wherein the coating has a low coefficient of friction with concrete.

14. The cantilever panel connecting element according to claim 13, **characterized in that** the coating is a releasing agent that prevents adhesion between concrete and the end section of the articulating element.

15. The cantilever panel connecting element according to claim 12, **characterized in that** the additional sliding means is a further joint socket (9, 10) that is in positive locking arrangement with the end sections (7, 8) of the articulating element (5).

16. The cantilever panel connecting element according to any of the preceding claims, **characterized in that** the end section(s) that is/are furnished with the positive locking socket joints (9, 10) has/have a coating that has a low coefficient of friction with the material of the socket joints.

17. The cantilever panel connecting element according to any of the preceding claims, **characterized in that** the socket joint (9, 10) protrudes from the surface of the end section (7, 8) of the articulating element (5), at least in portions (13, 14, 15, 16).

18. The cantilever panel connecting element according to claim 17, **characterized in that** the portions (13, 14, 15, 16) that protrude from the surface of the end section (7, 8) of the articulating element (5) are shaped such that they form a seal (17) between the ceiling/floor panel (2) and the cuboid insulating body (4) or between the cantilever panel (3) and the cuboid insulating body (4).

19. The cantilever panel connecting element according to claim 17 or 18, **characterized in that** the portions (13, 14, 15, 16) that protrude from the surface of the end section (7, 8) of the articulating element (5) are shaped such that portions (18) thereof are surrounded by the ceiling/floor panel (2) or the cantilever panel (3).

20. The cantilever panel connecting element according to any of the preceding claims, **characterized in that** the socket joint (9, 10) is furnished with knob-like elevations (19) at least in portions thereof, which protrude into the ceiling/floor panel (2) and the cantilever panel (3).

21. The cantilever panel connecting element according to any of the preceding claims, **characterized in that** the socket joint (9, 10) is constructed from sheet metal, teflon, aluminum, stainless steel, a teflon-coated sheet metal, a plastic film, and/or a teflon-coated film.

22. The cantilever panel connecting element according to any of the preceding claims, **characterized in that** the main body (6) has a circular cross section.

23. The cantilever panel connecting element according to any of claims 1 to 21, **characterized in that** the main body (6) has a cross section (20) that is essentially in the shape of a circle segment.

24. The cantilever panel connecting element according to any of claims 1 to 21, **characterized in that** the main body (6) has an essentially rectangular cross section (21), wherein one side of the rectangle is replaced by a circle segment.

25. The cantilever panel connecting element according to any of the preceding claims, **characterized in that** the articulating element (5) is made from an extremely rigid material, particularly fiber-reinforced concrete or ceramic.

26. The cantilever panel connecting element according to any of the preceding claims, **characterized in that** the articulating element (5) is constructed from at least two sub-elements (22, 23) that are attached to each other in positive locking manner.

27. The cantilever panel connecting element according to claim 26, **characterized in that** the two sub-elements (22, 23) are essentially identical and they have a shared contact plane (24), wherein the contact plane (24) includes the longitudinal axis of the main body of the articulating element.

28. The cantilever panel connecting element according to claim 26 or 27, **characterized in that** the articulating element is constructed from four essentially identical sub-elements, wherein two pairs of sub-elements each have a shared contact plane, wherein the two contact planes intersect each other along the longitudinal axis of the main body of the articulating element.

29. The cantilever panel connecting element according to any of claims 26 to 28, **characterized in that** the contact planes (24) are furnished with a sliding means.

30. The cantilever panel connecting element according to any of the preceding claims, **characterized in that** a seal (26) is provided that encircles the articulating element (5).

31. The cantilever panel connecting element according to any of the preceding claims, **characterized in that** two seals (26) are provided that encircle the articulating element (5) wherein one seal (26) is adjacent the end section (7) that faces the ceiling/floor panel, and the second seal (26) is adjacent the end section (8) that faces the cantilever panel.

## Revendications

1. Elément de connexion de dalle en console (1) pour relier une dalle de couverture/fond (2) à une dalle en console (3) avec des moyens de traction, des moyens de cisaillement, des moyens de pression et un organe isolant parallélépipédique (4), dans lequel au moins un moyen de pression est réalisé sous la forme d'un élément d'articulation(5) traversant l'organe isolant parallélépipédique (4), l'élément d'articulation (5) comprenant un corps principal (6), une section d'extrémité (7) du côté de la couverture/fond et une section d'extrémité (8) du côté de la dalle en console, le corps principal (6) étant pour l'essentiel entouré par l'organe isolant (4) parallélépipédique et les sections d'extrémité (7,8) pénétrant à l'état monté dans la dalle en console (3) et dans la dalle de couverture/fond (2), les surfaces des deux sections d'extrémité (7,8) de l'élément d'articulation (5) présentant chacune au moins dans une direction une courbure positive et l'une au moins des sections d'extrémité (7,8) étant munie d'un moyen de glissement, celui-ci étant une coupelle d'articulation (9,10) constituée d'une feuille dont la forme épouse celle de la section d'extrémité (7,8), la coupelle d'articulation (9,10) étant fermement reliée à l'état monté au béton l'entourant, et le diamètre intérieur (11) de la coupelle d'articulation (9,10) étant supérieur au diamètre extérieur (12) du corps principal (6) de l'élément d'articulation (5).

2. Elément de connexion de dalle en console selon la revendication 1, **caractérisé en ce que** le diamètre intérieur (11) de la coupelle d'articulation (9,10) est supérieur d'au moins 1% au diamètre extérieur (12) du corps principal (6) de l'élément d'articulation (5).

3. Elément de connexion de dalle en console selon la revendication 1, **caractérisé en ce que** le diamètre intérieur (11) de la coupelle d'articulation (9,10) est supérieur d'au moins 2% au diamètre extérieur (12) du corps principal (6) de l'élément d'articulation (5).

4. Elément de connexion de dalle en console selon la revendication 1, **caractérisé en ce que** le diamètre intérieur (11) de la coupelle d'articulation (9,10) est supérieur d'au moins 3% au diamètre extérieur (12) du corps principal (6) de l'élément d'articulation (5).

5. Elément de connexion de dalle en console selon la revendication 1, **caractérisé en ce que** le diamètre intérieur (11) de la coupelle d'articulation (9,10) est supérieur d'au moins 5% au diamètre extérieur (12) du corps principal (6) de l'élément d'articulation (5).

6. Elément de connexion de dalle en console selon la revendication 1, **caractérisé en ce que** le diamètre intérieur (11) de la coupelle d'articulation (9,10) est supérieur d'au moins 7% au diamètre extérieur (12) du corps principal (6) de l'élément d'articulation (5).

7. Elément de connexion de dalle en console selon la revendication 1, **caractérisé en ce que** le diamètre intérieur (11) de la coupelle d'articulation (9,10) est supérieur d'au moins 10% au diamètre extérieur (12) du corps principal (6) de l'élément d'articulation (5).

8. Elément de connexion de dalle en console selon la revendication 1, **caractérisé en ce que** le diamètre intérieur (11) de la coupelle d'articulation (9,10) est supérieur d'au moins 15% au diamètre extérieur (12) du corps principal (6) de l'élément d'articulation (5).

9. Elément de connexion de dalle en console selon la revendication 1, **caractérisé en ce que** le diamètre intérieur (11) de la coupelle d'articulation (9,10) est supérieur d'au moins 25% au diamètre extérieur (12) du corps principal (6) de l'élément d'articulation (5).

10. Elément de connexion de dalle en console selon l'une des revendications précédentes, **caractérisé en ce que** l'une au moins des sections d'extrémité (7,8) de l'élément d'articulation (5) présente dans deux directions une courbure positive.

11. Elément de connexion de dalle en console selon la revendication 10, **caractérisé en ce que** les courbures de l'une au moins des sections d'extrémité (7,8) de l'élément d'articulation (5) sont de la même grandeur dans les deux directions.

12. Elément de connexion de dalle en console selon l'une des revendications précédentes, **caractérisé en ce que** les deux sections d'extrémité (7,8) sont munies d'un moyen de glissement.

13. Elément de connexion de dalle en console selon la revendication 12, **caractérisé en ce que** l'autre moyen de glissement est constitué d'un revêtement, celui-ci présentant un coefficient de frottement inférieur à celui du béton.

14. Elément de connexion de dalle en console selon la revendication 13, **caractérisé en ce que** le revêtement est un moyen de séparation qui empêche une liaison adhérente entre la section de pièce d'articulation et le béton.

15. Elément de connexion de dalle en console selon la revendication 12, **caractérisé en ce que** l'autre moyen de glissement est une autre coupelle d'articulation (9,10) épousant la forme des sections d'extrémité (7,8) de l'élément d'articulation (5).

16. Elément de connexion de dalle en console selon l'une des revendications précédentes, **caractérisé en ce que** la/les section(s) d'extrémité (7,8) qui sont munies de la coupelle d'articulation (9,10) épousant la forme présentent un revêtement possédant un coefficient de frottement inférieur à celui du matériau des coupelles d'articulation.

17. Elément de connexion de dalle en console selon l'une des revendications précédentes, **caractérisé en ce que** la coupelle d'articulation (9,10) pénètre au moins dans des zones partielles (13,14,15,16) au-dessus de la surface des sections d'extrémité (7,8) de l'élément d'articulation (5).

18. Elément de connexion de dalle en console selon la revendication 17, **caractérisé en ce que** les zones partielles (13,14,15,16) pénétrant au-dessus de la surface des sections d'extrémité (7,8) de l'élément d'articulation (5) sont formées de telle manière qu'elles forment un joint (17) entre la dalle de couverture/fond (2) et l'organe isolant (4) parallélépipédique ou entre la dalle en console (3) et l'organe isolant (4) parallélépipédique.

19. Elément de connexion de dalle en console selon la revendication 17 ou 18, **caractérisé en ce que** les zones (13,14,15,16) pénétrant au-dessus de la surface des sections d'extrémité (7,8) de l'élément d'articulation (5) sont formées de telle manière qu'elles sont entourées dans des zones partielles (18) par la dalle de couverture/fond (2) ou la dalle en console (3).

20. Elément de connexion de dalle en console selon l'une des revendications précédentes, **caractérisé en ce que** la coupelle d'articulation (9,10) présente au moins dans des zones partielles des surélévations en forme de boucle (19), qui font saillie dans la dalle de couverture/fond (2) ou dans la dalle en console (3).

21. Elément de connexion de dalle en console selon l'une des revendications précédentes, **caractérisé en ce que** la coupelle d'articulation (9,10) est constitué de tôle, de téflon, d'aluminium, d'acier inoxydable, d'une tôle revêtue de téflon, d'une feuille en matière plastique et/ou d'une feuille revêtue de téflon.

22. Elément de connexion de dalle en console selon l'une des revendications précédentes, **caractérisé en ce que** le corps principal (6) présente une section transversale circulaire.

23. Elément de connexion de dalle en console selon l'une des revendications 1 à 21, **caractérisé en ce que** le corps principal (6) présente pour l'essentiel une zone circulaire en tant que section transversale (20).

24. Elément de connexion de dalle en console selon l'une des revendications 1 à 21, **caractérisé en ce que** le corps principal (6) présente pour l'essentiel une section transversale (21) carrée, l'un des côtés du carré étant remplacé par une zone circulaire.

25. Elément de connexion de dalle en console selon l'une des revendications précédentes, **caractérisé en ce que** l'élément d'articulation (5) est constitué d'un matériau hautement résistant, en particulier d'un béton à fibres, ou de céramique.

26. Elément de connexion de dalle en console selon l'une des revendications précédentes, **caractérisé en ce que** la coupelle d'articulation (5) est assemblé en deux éléments partiels (22,23) dont les formes correspondent l'une à l'autre.

27. Elément de connexion de dalle en console selon la revendication 26, **caractérisé en ce qu'**il s'agit de deux élément partiels essentiellement identiques (22,23) qui présentent un plan de contact commun (24), le plan de contact (24) comprenant l'axe longitudinal du corps principal de l'élément d'articulation.

28. Elément de connexion de dalle en console selon la revendication 26 ou 27, **caractérisé en ce qu'**il s'agit de quatre éléments partiels essentiellement identiques, dont chaque paire présente un plan de contact commun, les deux plans de contact se coupant le long de l'axe longitudinal du corps principal de l'élément d'articulation.

29. Elément de connexion de dalle en console selon l'une des revendications 26 à 28, **caractérisé en ce que** les plans de contact (24) sont munies d'un moyen de glissement.

30. Elément de connexion de dalle en console selon l'une des revendications précédentes, **caractérisé en ce qu'**un joint (26) est prévu autour de l'élément d'articulation (5).

31. Elément de connexion de dalle en console selon l'une des revendications précédentes, **caractérisé en ce que** deux joints (26) sont prévus autour de l'élément d'articulation (5), l'un (26) étant voisin de la section d'extrémité (7) du côté de la couverture/fond et l'autre (26) de la section d'extrémité (8) de l'élément d'articulation (5) du côté de la dalle en console.
